Europäisches Patentamt

European Patent Office

Office européen des brevets

(11) Publication number: **0 168 892**
**B1**

# EUROPEAN PATENT SPECIFICATION

(45) Date of publication of patent specification: **23.05.90**

(21) Application number: **85201149.3**

(22) Date of filing: **09.07.85**

(51) Int. Cl.⁵: **C 01 B 3/32,** C 01 B 3/34, C 01 B 3/44, C 01 B 3/38

(54) **Production of gas mixtures containing hydrogen and carbon monoxide.**

(30) Priority: **18.07.84 GB 8418239**

(43) Date of publication of application: **22.01.86 Bulletin 86/04**

(45) Publication of the grant of the patent: **23.05.90 Bulletin 90/21**

(84) Designated Contracting States: **AT BE DE FR IT SE**

(56) References cited:
EP-A- 110 093
DE-A-3 345 088
FR-A-2 532 192
GB-A- 845 401
GB-A-2 021 635
GB-A-2 139 644

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Van der Burgt, Maarten Johannes**
**Carel van Bylandtlaan 30**
**NL 2596-HR The Hague (NL)**
Inventor: **Schoeber, Willem Jan Antoon Henri**
**Carel van Bylandtlaan 30**
**NL 1031 CM Amsterdam (NL)**

(74) Representative: **Aalbers, Onno et al**
**P.O. Box 302**
**NL-2501 CH The Hague (NL)**

EP 0 168 892 B1

Courier Press, Leamington Spa, England.

## Description

The present invention relates to a process for producing a gas mixture containing hydrogen and carbon monoxide, comprising: endothermic reaction of one or more organic compounds with steam and/or carbon dioxide; and partial oxidation of one or more gaseous fuels with an oxygen-containing gas in the presence of steam whereby a gaseous product is produced and thermal energy for said endothermic reaction is provided, wherein the partial oxidation is carried out in a partial oxidation zone, the endothermic reaction is carried out in an endothermic reaction zone, and products of the partial oxidation are fed from the partial oxidation zone into the endothermic reaction zone. Such a process is known from GB—A—845,401. The endothermic reaction of organic compounds with steam is described in "Encyclopedia of Chemical Technology" by Kirk-Othmer (3rd edition, 1980); Volume 21, page 543.

Endothermic thermal or catalytic reaction of organic compounds, especially hydrocarbons, in the presence of steam and/or carbon dioxide to produce carbon monoxide and hydrogen is an established reaction which is operated industrially using various processes. Such a process can be carried out in a tubular reactor, the necessary heat of reaction being supplied via heat transport through the walls of the tubes or in a medium of externally heated solid heat exchanger material e.g. fine grained solid which is used in a fluidized bed.

The known processes necessitate involved technology and exhibit low thermal efficiency.

In the autothermic partial oxidation of organic compounds, the necessary thermal energy is supplied by the process itself via partial combustion of the organic feedstock. This technique is also technically involved as well as requiring oxygen.

An object of the invention is to increase the thermal efficiency of the conversion of hydrocarbons into synthesis gas thereby enabling the reaction of the carbon compounds with an optimal or near optimal consumption of energy and materials in the manufacture of synthesis gas from gaseous fuels.

The process of the present invention, therefore, is characterized in that the endothermic reaction between the organic compounds and steam and/or carbon dioxide is carried out at a pressure of up to 80 bar in a fluid bed reactor in which a temperature of 800—950°C is maintained by routing the organic compounds together with steam and/or $CO_2$ through a fluid bed of particulate catalyst and wherein at least part of the hot product gas from the partial oxidation reactor is routed through the fluid bed of particulate catalyst.

It is remarked that GB—A—2,021,635 discloses a combination process in which one or more carbonaceous ash-forming fuels are used as feedstocks for the partial oxidation reactor. Sensible heat produced in a coal gasifier is used for the endothermic steam reforming of gaseous hydrocarbons.

Further, EP 0 110 093 discloses a process similar to GB—A—2,021,635. There is no question of fluid bed conditions in a fluid bed reactor, however.

Further, it is remarked that FR—A—2,532,192 discloses a fluid bed reaction system. The specific combination of the present invention has not been disclosed, however.

In the process according to the invention by-products and waste products from chemical synthesis and natural gas can be employed as the organic compounds and/or the gaseous fuels.

The oxygen-containing gas may be pure oxygen, air or mixtures of pure oxygen and air.

In view of the depletion of oil reserves, the partial oxidation of gaseous fuels to synthesis gas, which is a feedstock for many chemicals, is a subject of growing interest.

The partial oxidation of gaseous feedstocks can take place according to various established processes.

These processes include the Shell Gasification Process. A comprehensive survey of this process can be found in the Oil and Gas Journal, September 6, 1971, pp. 85—90.

The partial oxidation of gaseous fuels is usually carried out at temperatures around 900 to roughly 1600°C, preferably 1100 to 1500°C and pressures up to 100 bar, preferably 5 to 100 bar.

As a consequence of the high partial oxidation temperature and the use of gaseous fuels as feedstocks, the resulting synthesis gas contains no ash, slag, soot or tar, thereby eliminating the necessity of using expensive purification steps. Raised pressure, high temperature and a gaseous feed lead to a high degree of conversion and relative to the volume of the gasification chamber, they effect a high specific throughput. In the majority of plants in which synthesis gas converted into products such as ammonia, Oxo compounds, methanol or products from the Fischer-Tropsch synthesis or the coal hydrogenation and which operate under pressure, a considerable part of the investment required for the compression can be saved on partial oxidizing gaseous fuels under pressure. Compared to the established gasificiation processes in which ash-containing fuel is employed or which operate under normal pressure, the pressure partial oxidation of gaseous fuel permits a considerable saving in the manufacturing costs of synthesis gas.

The process according to the invention enables the use of the sensible heat of the gas for the endothermic reaction of organic compounds with steam and/or carbon dioxide, is used to cool the synthesis gas.

In accordance with a preferred embodiment of the invention on leaving the partial oxidation reactor the hot synthesis gas is immediately brought into contact with the organic compounds to be reacted with steam and/or carbon dioxide, i.e. preferably in a fluidized bed-containing reactor.

With the process of the invention, it is possible to conduct the partial oxidation of gaseous fuels, under pressure, with optimal heat recovery in the waste heat system whilst utilizing the highest possible temperature gradient. There is no blockage or baking in the units which are located after the gasifier, especially in the apparatus for recovering the waste heat. The endothermic reaction of the charge consisting of one or more organic compounds has a cooling effect on the synthesis gas. The process of the invention leads to the formation of an increased amount of synthesis gas as carbon monoxide and hydrogen result from the endothermic reaction between the organic compounds with steam or carbon dioxide.

Hydrocarbons or oxygen-containing compounds are particularly suitable as organic compounds to be converted into carbon monoxide and hydrogen via the endothermic reaction with steam and/or carbon dioxide, and/or the partial oxidation with an oxygen-containing gas. Some examples are methane, ethane, ethylene, propane, propylene, butane, butylenes naphtha, gasoil, flashed distillate, deasphalted oil, any non-ashcontaining fuel, methanol, ethanol, propanol, formaldehyde, acetaldehyde, propionaldehyde, butyraldehyde, acetone, methyl ethyl ketone, diethyl ketone, dipropyl ketones, dimethyl ether, methyl ethyl ether, diethyl ether, propyl formate, butyl formate, formic acid, acetic acid, propionic acid and phenols (aromatic hydroxy compounds). They are reacted either alone or as a mixture of any quantitative and qualitative content.

The endothermic reaction and/or the partial oxidation are particularly suitable for the by-products of those syntheses where synthesis gas is used as feedstock.

For example, in the Fischer-Tropsch synthesis lower hydrocarbons or oxygen-containing compounds are obtained as by-products. Ethers and other oxygen-compounds are formed during the methanol synthesis, while branched aldehydes and hydrocarbons result as by-products of the olefin hydroformylation.

Thus, the combination of the partial oxidation with a chemical synthesis is of particular interest. If the non-required or undesired by-products are at least in part recycled on removal from the synthesis stage to the endothermic reaction stage to produce hydrogen and synthesis gas, then the yields relative to the carbon feed and the thermal efficiency of the combined processes will be markedly increased.

The Fischer-Tropsch synthesis can be taken as an example. The plant consists of a synthesis gas production unit, the actual Fischer-Tropsch synthesis and the stage for processing the products. Control of the process as well as the total yield of valuable products and the thermal efficiency can be markedly improved when, in accordance with the process of the invention, the undesired low boiling by-products of the synthesis, e.g. methane as well as $C_2$- and part of the $C_3$ hydrocarbons, are recycled with water and/or carbon dioxide to the endothermic reaction stage where they are converted via an endothermic reaction to carbon monoxide and hydrogen. While the thermal efficiency of the combined partial oxidation, synthesis and final processing steps (including the energy requirements of the conventional process) i.e. without recycling the Fischer-Tropsch by-products, amounts to roughly 58%, the thermal efficiency of the process of the invention increases to roughly 64% on recycling the by-products. There is a similar situation with oxygen-containing by-products of the Fischer-Tropsch synthesis, in particular with lower aldehydes and alcohols.

Utilizing the heat content of the synthesis gas leaving the partial oxidation, which can be at a temperature up to 1600°C, increases not only the yield of valuable products on reacting the low-value by-products with steam and/or $CO_2$ to carbon monoxide and hydrogen but also considerably simplifies operation of the process. The endothermic reaction of the carbon-containing compounds with steam and/or $CO_2$ can still proceed at a sufficient rate at only 800°C.

Positive results are achieved with all syntheses with carbon monoxide or a synthesis gas feedstock. The significance of the invention is therefore not limited to the combination of synthesis gas production with the Fischer-Tropsch-synthesis. It also encompasses in the same way the combination of synthesis gas production with methanol synthesis, Oxo synthesis or other processes which are based on a carbon monoxide or a carbon monoxide and hydrogen feed. The same applies to processes for the hydrogenation of coal under pressure where the hydrogen for the hydrogenation is produced by partial oxidation of fuels especially coal or solid-containing high boiling hydrocarbon fractions which are obtained from the coal hydrogenation.

It is particularly worth mentioning that, the process according to the invention, does not merely permit the utilization of the by-products from chemical synthesis but also the use of carbon dioxide, which always results from the autothermic gasification of fuels and/or subsequent CO-shift reactions.

The endothermic reaction of organic compounds with steam and/or $CO_2$ can occur at temperatures as low as 800°C. Thus, the quantity of the organic compounds and therefore also the quantity of water and/or carbon dioxide is determined by the temperature of the synthesis gas leaving the reactor. For each gram-atom of carbon of the organic compound, at least 3 moles, usually 4 to 6 moles of water and/or carbon dioxide are introduced.

The extent of the increase in thermal efficiency and yield of value products in connected plants, which according to the invention consists of partial oxidation and endothermic reaction units, depends on the prevailing conditions, in particular on reaction conditions, products and the efficiency of the heat and product recovery plants.

In summary the invention relates to a process for producing a gas mixture containing hydrogen and carbon monoxide, comprising: endothermic reaction of one or more organic compounds with steam and/or carbon dioxide; and partial oxidation of one or more gaseous fuels with an oxygen-containing gas in the presence of steam whereby a gaseous product is produced and thermal energy for said endothermic reaction is provided, wherein the partial oxidation is carried out in a partial oxidation zone, the endothermic reaction is carried out in an endothermic reaction zone, and products of the partial oxidation are fed from the partial oxidation zone into the endothermic reaction zone. The process is characterized by the fact that the endothermic reaction between the organic compounds and steam and/or carbon dioxide is carried out at a pressure of up to 80 bar in a fluid bed reactor in which a temperature of 800—950°C is maintained by routing the organic compounds together with steam and/or $CO_2$ through a fluid bed of particulate catalyst and wherein at least part of the hot product gas from the partial oxidation reactor is routed through the fluid bed of particulate catalyst.

Preferred embodiments of the invention are summarized as follows:

1. Process as described hereinbefore in which natural gas is employed as the gaseous fuel and/or the organic compound.

2. Process as described hereinbefore in which the endothermic reaction of the organic compounds ensues in a zone situated after the gasification zone.

3. Process as described hereinbefore in which the compounds to be endothermally reacted are peheated together with steam and/or carbon dioxide before entering the reaction zone.

4. Process as described hereinbefore in which saturated or unsaturated hydrocarbons with 1 to 3 carbon atoms are employed as the organic compounds.

5. Process as described hereinbefore in which the products of the Fischer-Tropsch, methanol or Oxo synthesis can be employed as the organic compounds.

6. Process as described hereinbefore in which the endothermic reaction between the organic compounds and steam and/or carbon dioxide is carried out in a fluid bed reactor in which a temperature of 800—950°C is advantageously maintained by routing the organic compounds and at least part of the hot product gas from the partial oxidation reactor together with steam and/or $CO_2$ through a fluid bed of particulate catalyst.

7. Process as described hereinbefore in which the endothermic reaction between the organic compounds and steam and/or carbon dioxide is carried out in a fluid bed reactor in which a temperature of 800—950°C is advantageously maintained by routing the organic compounds together with steam and/or carbon-dioxide through a fluid bed of particulate catalyst, which catalyst has been indirectly heated by means of at least part of the hot product gas from the partial oxidation reactor and thereafter has been recirculated to the endothermic fluid bed reactor.

8. Process as described hereinbefore in which the endothermic reaction between the organic compounds and steam and/or carbon dioxide is carried out in a fluid bed reactor in which a temperature of 800—950°C is advantageously maintained by routing the organic compounds together with steam and/or carbon dioxide through a fluid bed of particulate catalyst which is indirectly heated by means of at least part of the hot product gas from the partial oxidation reactor being passed through at least one pipe situated in the fluid catalyst bed.

9. Process as described hereinbefore in which the endothermic reaction between the organic compounds and steam and/or carbon dioxide is carried out in a fixed catalyst bed situated in at least one pipe in which a temperature of 800—950°C is advantageously maintained by routing at least part of hot product gas from the partial oxidation along the pipe(s).

10. Process as described hereinbefore in which the endothermic reaction between the organic compounds and steam and/or carbon dioxide is carried out in a fixed catalyst bed situated in at least one pipe in which a temperature of 800—950°C is advantageously maintained by means of at least one heat transfer medium, e.g. liquid metal or a fluid bed, which medium has been heated by means of at least one other pipe through which at least part of the hot product gas from the partial oxidation reactor is passed.

11. Process as described hereinbefore in which at least one gaseous by-product from at least one synthesis where synthesis gas is used as feedstock, is burnt in a gas turbine and at least part of the hot exhaust gas from the gas turbine is used for preheating at least part of the organic compounds to be reacted with steam and/or carbon dioxide, at least part of the gaseous fuel to be partially oxidized and/or at least part of the steam, carbon dioxide and/or oxygen-containing gas to be used in said reactions.

12. A process as described hereinbefore in which at least part of the hot gas from the partial oxidation reactor and/or at least part of the hot gas obtained by the reaction of one or more organic compounds with steam and/or carbon dioxide is passed together with one or more light hydrocarbons, an oxygen-containing gas and optionally steam and/or $CO_2$ to a catalytic partial oxidation unit in order to increase the amount of synthesis gas produced.

By the process according to the invention and its preferred embodiments the following advantages are obtained over the prior art processes:

1) a better yield of synthesis gas;

2) an increased $H_2/CO$ ratio in the synthesis gas obtained;

3) a lower usage of oxygen per $m^3$ of syngas obtained;

4) a lower capital cost of the plant for the production of CO- and $H_2$-containing gas mixtures.

**Claims**

1. A process for producing a gas mixture containing hydrogen and carbon monoxide, comprising: endothermic reaction of one or more organic compounds with steam and/or carbon dioxide; and partial oxidation of one or more gaseous fuels with an oxygen-containing gas in the presence of steam whereby a gaseous product is produced and thermal energy for said endothermic reaction is provided, wherein the partial oxidation is carried out in a partial oxidation zone, the endothermic reaction is carried out in an endothermic reaction zone, and products of the partial oxidation are fed from the partial oxidation zone into the endothermic reaction zone, characterized in that the endothermic reaction between the organic compounds and steam and/or carbon dioxide is carried out at a pressure of up to 80 bar in a fluid bed reactor in which a temperature of 800—950°C is maintained by routing the organic compounds together with steam and/or $CO_2$ through a fluid bed of particulate catalyst and wherein at least part of the hot product gas from the partial oxidation reactor is routed through the fluid bed of particulate catalyst.

2. The process as claimed in claim 1 characterized in that the catalyst has been indirectly heated by means of at least part of the hot product gas from the partial oxidation reactor and thereafter has been recirculated to the endothermic fluid bed reactor.

3. The process as claimed in claim 1 characterized in that the particulate catalyst is indirectly heated by means of at least part of the hot product gas from the partial oxidation reactor being passed through at least one pipe situated in the fluid catalyst bed.

4. The process as claimed in any one of claims 1—3 wherein the gaseous fuel is natural gas.

**Patentansprüche**

1. Verfahren zur Erzeugng eines Wasserstoff und Kohlenmonoxid enthaltenden Gasgemisches, welches Verfahren die endotherme Reaktion einer oder mehrerer organischer Verbindungen mit Dampf und/oder Kohlendioxid und die partielle Oxydation eines oder mehrerer gasförmiger Brennstoffe mit einem Sauerstoff enthaltenden Gas in Gegenwart von Dampf umfaßt, wodurch ein gasförmiges Produkt gebildet und thermische Energie für die genannte endotherme Reaktion geliefert wird, worin die partielle Oxydation in einer Partialoxydationszone, die endotherme Reaktion in einer Endotherm-Reaktionszone ausgeführt wird und die Produkte der partiellen Oxydation von der Partialoxydationszone in die Endotherm-Reaktionszone geführt werden, dadurch gekennzeichnet, daß die endotherme Reaktion zwischen den organischen Verbindungen und Dampf und/oder Kohlendioxid bei einem Druck von bis zu 80 bar in einem Fließbettreaktokr ausgeführt wird, worin eine Temperatur von 800—950°C aufrecht erhalten wird, indem die organischen Verbindungen zusammen mit Dampf und/oder Kohlendioxid durch ein Fließbett aus teilchenförmigem Katalysator geführt werden, und worin wenigstens ein Teil des heißen Produktgases aus dem Partialoxydationsreaktor durch das Fließbett aus teilchenförmigem Katalysator geführt wird.

2. Verfahren nach Anspruch 1, dadurch gekennzeichnet, daß der Katalysator indirekt mittels wenigstens eines Teiles des heißen Produktgases aus dem Partialoxydationsreaktor erwärmt und anschließend zum endothermen Fließbettreaktor zurückgeführt worden ist.

3. Verfahren nach Anspruch 1, dadurch gekennzeichnet, daß der teilchenförmige Katalysator indirekt mittels wenigstens eines Teiles des heißen Produktgases aus dem Partialoxydationsreaktor erwärmt wird, welches Gas durch wenigstens ein im Katalysatorfließbett angeordnetes Rohr geführt wird.

4. Verfahren nach einem der Ansprüche 1 bis 3, worin der gasförmige Brennstoff Erdgas ist.

**Revendications**

1. Un procédé pour la production d'un mélange gazeux renfermant de l'hydrogène et du gaz carbonique, comportant: la réaction endothermique d'un ou de plus d'un composé organique avec de la vapeur et/ou du dioxyde de carbone; et une oxydation partielle d'un ou de plus d'un carburant gazeux au moyen d'un gaz renfermant de l'oxygène en présence de vapeur, de sorte que l'on obtient un produit gazeux et de l'énergie thermique pour ladite réaction endo-thermique, dans lequel l'oxydation partielle est réalisée dans une zone d'oxydation partielle et la réaction endo-thermique est réalisée dans une zone de réaction endothermique, caractérisé par le fait que la réaction endothermique entre les composés organiques et la vapeur et/ou le dioxyde de carbone est réalisée sous une pression allant jusqu'à 80 bars dans un réacteur à lit fluidisé dans lequel on maintient une température de 800 à 950°C en faisant passer les composés organiques conjointement avec la vapeur et/ou le $CO_2$ à travers un lit fluidisé de catalyseur particulaire et dans lequel on fait passer au moins une partie du gaz chaud produit à partir du réacteur d'oxydation partielle à travers le lit fluidisé de catalyseur particulaire.

2. Le procédé tel que revendiqué dans la revendication 1, caractérisé en ce que le catalyseur a été chauffé indirectement au moyen d'au moins une partie du gaz chaud produit provenant du réacteur d'oxydation partielle et a été par la suite recyclé au réacteur à lit fluidisé endothermique.

3. Le procédé tel que revendiqué dans la revendication 1, caractérisé en ce que le catalyseur particulaire est chauffé indirectement au moyen d'au moins une partie du gaz chaud produit provenant du réacteur d'oxydation partielle, passant à travers au moins une conduite située à l'intérieur du lit fluidisé catalytique.

4. Le procédé tel que revendiqué dans l'une quelconque des revendications 1 à 3, dans lequel le carburant gazeux est du gaz naturel.